# EUROPEAN PATENT APPLICATION

(11) **EP 4 787 442 A1**
(43) Date of publication of application: **05.08.2026**
(21) Application number: 26162006.6
(22) Date of filing: 18.10.2023
(51) Int. Cl.: H01M 4/04, H01M 4/139, H01M 10/04, B65H 23/192, B21C 47/00, B65H 23/18, B65H 23/188

(54) **COMPRESSION DEVICE**

(30) Priority: 18.11.2022 JP 2022184711
(62) Divisional of application: 23891275.2
(71) Applicant: Panasonic Energy Co., Ltd., Moriguchi-shi, Osaka 570-8511 (JP)
(72) Inventor: TERASAWA, Fumihiro, Kadoma-shi, Osaka, 571-0057 (JP)
(74) Representative: Novagraaf International SA

(57) **Abstract**

A disclosed compression apparatus includes: a first compression roll that compresses an electrode plate for battery use; a second compression roll that is provided downstream of the first compression roll and that compresses the electrode plate; a dancer roll that is provided between the first compression roll and the second compression roll and that adjusts tension applied to the electrode plate by moving between a first end point and a second end point; and a control unit that controls the first compression roll, the second compression roll, and the dancer roll. The control unit is configured to adjust, when the dancer roll has moved beyond a first threshold value from the middle point between the first end point and the second end point, rotational speeds of either or both the first compression roll and the second compression roll so as to dampen movement of the dancer roll away from the middle point. Thus, tension fluctuations between the two compression rolls can be stably suppressed.

## Description

### [Technical Field]

The present disclosure relates to a compression apparatus.

### [Background Art]

Conventionally, a compression apparatus for compressing an electrode plate for battery use has been known (e.g., Patent Literature 1). The compression apparatus of Patent Literature 1 includes first and second compression rolls for compressing an electrode plate, and a dancer roll provided between the rolls for adjusting tension applied to the electrode plate. In this compression apparatus, the rotational speed of the first compression roll is increased when the position of the dancer roll becomes higher than a predetermined intermediate height, and the rotational speed of the first compression roll is reduced when the position of the dancer roll becomes lower than the intermediate height.

### [Citation List]

### [Patent Literature]

Patent Literature 1 Korean Patent No. 10-1810145

### [Summary of Invention]

### [Technical Problem]

However, the speed control described above can cause the following problems. That is, in a situation in which the first and second compression rolls are actively accelerated or decelerated (e.g., at activation of the compression apparatus), the dancer roll inevitably displaces in order to suppress fluctuations in tension applied to the electrode plate between the rolls. When the speed control described above is executed in such a situation, the speed control on the first compression roll and the position control on the dancer roll may interfere with each other to invite unstable control on the entire apparatus. In view of the foregoing, one object of the present disclosure is stably suppress tension fluctuations between the two compressing rolls.

### [Solution to Problem]

One aspect of the present disclosure relates to a compression apparatus. The compression apparatus includes: a first compression roll that compresses an electrode plate for battery use; a second compression roll that is provided downstream of the first compression roll and that compresses the electrode plate; a dancer roll that is provided between the first compression roll and the second compression roll and that adjusts tension applied to the electrode plate by moving between a first end point and a second end point; and a control unit that controls the first compression roll, the second compression roll, and the dancer roll, wherein the control unit is configured to adjust, when the dancer roll has moved beyond a first threshold value from a middle point between the first end point and the second end point, rotational speeds of either or both the first compression roll and the second compression roll so as to dampen movement of the dancer roll away from the middle point.

Another aspect of the present disclosure relates to a compression apparatus. The compression apparatus includes: a first compression roll that compresses an electrode plate for battery use; a second compression roll that is provided downstream of the first compression roll and that compresses the electrode plate; a first speed sensor that detects a conveyance speed of the electrode plate carried out of the first compression roll; and a control unit that controls the first compression roll and the second compression roll, wherein the control unit is configured to adjust a rotational speed of the second compression roll based on at least the conveyance speed detected by the first speed sensor.

### [Advantageous Effects of Invention]

According to the present disclosure, tension fluctuations between the two compressing rolls can be stably suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic side view of a compression apparatus of a first embodiment.
[FIG. 2] FIG. 2 is a flowchart of control for adjusting the rotational speed of a first compression roll in the first embodiment.
[FIG. 3] FIG. 3 is a flowchart of control for adjusting the rotational speed of a second compression roll in the first embodiment.
[FIG. 4] FIG. 4 is a schematic side view of a compression apparatus of a second embodiment.
[FIG. 5] FIG. 5 is schematic side view of a compression apparatus of a third embodiment.
[FIG. 6] FIG. 6 is schematic side view of a compression apparatus of a fourth embodiment.
[FIG. 7] FIG. 7 is a flowchart of control for adjusting the rotational speed of a second compression roll in the fourth embodiment.

### [Description of Embodiments]

Embodiments of a compression apparatus according to the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

A compression apparatus (hereinafter, also referred to as a compression apparatus A) according to an embodiment of the present disclosure is an apparatus for compressing an electrode plate for battery use, and includes a first compression roll, a second compression roll, a dancer roll, and a control unit. The battery includes primary batteries such as a lithium primary battery, and secondary batteries such as alkaline storage batteries (e.g., a nickel-hydrogen battery and a nickelcadmium battery), lithium-ion secondary batteries, lithium-metal secondary batteries, and all-solid-state batteries including a solid-state electrolyte. In the present disclosure, power storage devices (e.g., a lithium-ion capacitor) in which at least one of the positive electrode and the negative electrode is an electrode that expresses its capacity by the Faraday reaction are also belong to the category of the secondary battery.

The first compression roll compresses the electrode plate for battery use. The electrode plate may include a coated portion, which is a part of a surface of a substrate (current collector plate) where an active material layer is formed, and a foil exposed portion (uncoated portion), which is another part of the surface of the substrate where the active material layer is not formed. The first compression roll may compress the coated portion of the electrode plate. The first compression roll may include a pair of rolls placed at a predetermined interval.

The second compression roll is provided downstream of the first compression roll and compresses the electrode plate for battery use. The second compression roll may compress the coated portion of the electrode plate. The second compression roll may include a pair of rolls placed at a predetermined interval. The outer diameter of the second compression roll may be equal to or different from the outer diameter of the first compression roll.

The first compression roll and the second compression roll may be configured to compress the uncoated portion of the electrode plate in addition to the coated portion of the electrode plate. Typically, in a case in which an electrode plate including an active material layer formed by intermittently applying a mixture slurry to a substrate is compressed by a compression roll, uncoated portions of the electrode plate are compressed. In an electrode plate of this type, coated portions are intermittently formed in the longitudinal direction of the substrate, and uncoated portions between adjacent coated portions are compressed by the compression roll.

The dancer roll is provided between the first compression roll and the second compression roll. The dancer roll moves (or displaces) between a first end point and a second end point to adjust tension applied to the electrode plate for battery use. The first end point may be an upper end point and the second end point may be a lower end point. In this case, the dancer roll may move vertically between the upper end point and the lower end point. For example, the dancer roll may move toward the first end point to reduce the tension, and move toward the second end point to increase the tension.

The control unit controls the first compression roll, the second compression roll, and the dancer roll. The control unit may control, for example, the rotational speeds of the first compression roll and the second compression roll, and the position of the dancer roll. The control unit may include an arithmetic device (e.g., a CPU) and a storage device (e.g., non-volatile memory) that stores therein programs executable by the arithmetic device.

The control unit is configured to adjust, when the dancer roll has moved beyond a first threshold value from the middle point between the first end point and the second end point, the rotational speeds of either or both the first compression roll and the second compression roll so as to dampen movement of the dancer roll away from the middle point of the dancer roll. The middle point may be an initial point of the dancer roll located between the first end point and the second end point. The distance between the middle point and the first end point and the distance between the middle point and the second end point may be equal to or different from each other. The first threshold value may be, for example, a predetermined value that is 5% or more and 50% or less of the distance between the middle point and each end point, a predetermined value that is 10% or more and 50% or less of the distance, a predetermined value that is 20% or more and 40% or less of the distance, or a predetermined value that is 30% or more and 70% or less of the distance.

By compressing the electrode plate for battery use in the compression apparatus A having the above-described configuration, that is, by continuously compressing the electrode plate using the first and second compression rolls, the electrode plate can be efficiently compressed. In order to stably perform such efficient compression, it is necessary to suppress fluctuations in tension applied to the electrode plate between the first compression roll and the second compression roll. This suppression of tension fluctuations can basically be achieved by using the dancer roll provided between the two compression rolls.

However, a problem arises because only the dancer roll plays a role of suppressing tension fluctuations. That is, since there is a limit to the allowable movement range of the dancer roll, tension applied to the electrode plate cannot be adjusted when the dancer roll has moved beyond its allowable movement range. For example, in a situation in which tension adjustment is necessary upon the dancer roll moving toward the first end point, it becomes difficult to appropriately adjust the tension after the dancer roll reaches the first end point.

In view of the foregoing, as described above, the control unit according to the present disclosure adjusts, when the dancer roll has moved beyond the first threshold value from the middle point, the rotational speed of at least one of the first compression roll and the second compression roll so as to dampen movement of the dancer roll further away from the middle point. For example, when tension between the two compression rolls needs to be reduced, the control unit may increase the rotational speed of the first compression roll, reduce the rotational speed of the second compression roll, or both. As a result, the tension applied to the electrode plate between the two compression rolls can be appropriately adjusted without the dancer roll moving beyond its allowable movement range.

Further, the rotational speed control is performed only when the amount of movement of the dancer roll from the middle point exceeds the first threshold value, which is also one of important features of the compression apparatus A. That is, in a situation in which the first and second compression rolls are actively accelerated or decelerated (e.g., when the compression apparatus A is about to activate or being stopped), the dancer roll inevitably displaces or moves in order to suppress fluctuations in tension applied to the electrode plate between the two compression rolls as described above. Here, even when the dancer roll has moved away from the middle point, the rotational speed control for dampening the movement is not performed in such an acceleration or deceleration situation, for example, by setting the first threshold value to a value exceeding the amount of the movement. Since the position control on the dancer roll and the rotational speed control on each compression roll do not interfere with each other, the control on the entire apparatus can be stabilized. That is, by providing the first threshold value as a trigger condition for the rotational speed control on either or both the first and second compression rolls, fluctuations in tension applied to the electrode plate between the two compression rolls can be stably suppressed.

The control unit may be configured so that the rotational speeds of the first compression roll and the second compression roll do not change during the time when the amount of movement of the dancer roll from the middle point does not exceed the first threshold value in a steady state. The steady state refers to a state in which the rotational speeds of the first and second compression rolls are not actively accelerated or decelerated, or a state in which the rotational speeds of the first and second compression rolls are stable (except minute fluctuations). Usually, compression of the electrode plate is performed continuously in the steady state. In this configuration, in the steady state, only the dancer roll carries the role of suppressing fluctuations in tension applied to the electrode plate between the two compression rolls during the time when the amount of movement of the dancer roll does not exceed the first threshold value. This enables stable compression of the electrode plate by the two compression rolls.

The compression apparatus may further include a stretching roll provided upstream of the first compression roll to stretch the foil exposed portion of the electrode plate. The control unit may be configured to adjust, when the dancer roll has moved beyond the first threshold value from the middle point, the rotational speed of the second compression roll to dampen movement of the dancer roll away from the middle point. In this configuration, the foil exposed portion of the electrode plate is stretched by the stretching roll before the coated portion of the electrode plate is compressed by the first compression roll. Here, when the rotational speed of the first compression roll is adjusted so as to dampen movement of the dancer roll away from the middle point, there is a risk that the speed adjustment could affect the stretching roll, leading to unstable stretching of the foil exposed portion. In the above configuration by contrast, since the rotational speed of the second compression roll located farther away from the stretching roll than the first compression roll is adjusted so as to dampen movement of the dancer roll away from the middle point. Therefore, influence of the speed adjustment is less likely to affect the stretching roll. Thus, stable stretching of the foil exposed portion by the stretching roll can be achieved.

The compression apparatus may further include a stretching roll provided downstream of the second compression roll to stretch the foil exposed portion of the electrode plate. The control unit may be configured to adjust, when the dancer roll has moved beyond the first threshold value from the middle point, the rotational speed of the first compression roll to dampen movement of the dancer roll away from the middle point. In this configuration, the foil exposed portion of the electrode plate is stretched by the stretching roll after the coated portion of the electrode plate is compressed by the second compression roll. Here, when the rotational speed of the second compression roll is adjusted so as to dampen movement of the dancer roll away from the middle point, there is a risk that the speed adjustment could affect the stretching roll, leading to unstable stretching of the foil exposed portion. In the above configuration by contrast, since the rotational speed of the first compression roll located farther away from the stretching roll than the second compression roll is adjusted so as to dampen movement of the dancer roll away from the middle point. Therefore, influence of the speed adjustment is less likely to affect the stretching roll. Thus, stable stretching of the foil exposed portion by the stretching roll can be achieved.

A compression apparatus (hereinafter also referred to as compression apparatus B) according to another embodiment of the present disclosure is an apparatus for compressing an electrode plate for battery use, and includes a first compression roll, a second compression roll, a first speed sensor, and a control unit.

The first compression roll and the second compression roll may be similar to those of the compression apparatus A.

The first speed sensor detects the conveyance speed of the electrode plate carried out of the first compression roll. The first speed sensor may be a contactless speed sensor. The first speed sensor may detect the conveyance speed of the electrode plate between the first compression roll and an element (e.g., a guide roll) positioned immediately after the first compression roll. Alternatively, the first speed sensor may directly detect the rotational speed of the first compression roll. In this case, the conveyance speed of the electrode plate can be obtained based on the detected value.

Here, the conveyance speed of the electrode plate carried out of the first compression roll is higher than the conveyance speed of the electrode plate to be carried into the first compression roll. This is because the electrode plate is stretched in the conveying direction when the electrode plate is compressed. In this sense, the compression roll can also be referred to as a rolling roll for rolling the electrode plate. Therefore, it is not sufficient to control the conveyance speed over the entire conveyance path of the electrode plate. Rather, when such control is performed, tension applied to the electrode plate may fluctuate particularly in a subsequent stage after the first compression roll, that is, between the first compression roll and the second compression roll.

By contrast, the control unit of the compression apparatus B is configured to adjust the rotational speed of the second compression roll based on at least the conveyance speed detected by the first speed sensor. For example, the control unit may adjust the rotational speed of the second compression roll through use of a table (which may be stored in the storage device of the control unit) in which the conveyance speed and the setting value of the rotational speed of the second compression roll are associated with each other. Alternatively, the control unit may calculate a setting value of the rotational speed of the second compression roll using a predetermined function including the conveyance speed as a variable, and adjust the rotational speed of the second compression roll using the calculated setting value. According to such speed adjustment (or speed control), fluctuations in tension applied to the electrode plate between the first compression roll and the second compression roll can be suppressed.

The compression apparatus B may further include a second speed sensor that detects the conveyance speed of the electrode plate to be carried into the first compression roll. The control unit may be configured to adjust the rotational speed of the second compression roll based on the conveyance speed detected by the first speed sensor and the conveyance speed detected by the second speed sensor. For example, the control unit may adjust the rotational speed of the second compression roll based on the difference between the former conveyance speed and the latter conveyance speed. In this case, it can be considered to determine the setting value of the rotational speed of the second compression roll by using a predetermined table or by using a predetermined function. As a result, fluctuations in tension applied to the electrode plate between the two compression rolls can be further suppressed.

The control unit may be configured to adjust the rotational speed of the second compression roll based on an elongation rate λ1 of the electrode plate determined as λ1 = (V1/V2) - 1, where V1 represents the conveyance speed detected by the first speed sensor and V2 represents the conveyance speed detected by the second speed sensor. The elongation rate λ1 is a value indicating the degree to which the electrode plate is stretched by compression in the first compression roll. For example, the control unit may adjust the rotational speed of the second compression roll through use of a table in which the elongation rate λ1 and the setting value of the rotational speed of the second compression roll are associated with each other. Alternatively, the control unit may calculate a setting value of the rotational speed of the second compression roll using a predetermined function including the elongation rate λ1 as a variable, and adjust the rotational speed of the second compression roll using the calculated setting value. As a result, fluctuations in tension applied to the electrode plate between the two compression rolls can be further suppressed.

The control unit may be configured to rotate the second compression roll at a rotational speed V4 determined as V4 = (1 + λ1) × V3, where V3 represent the rotational speed of the first compression roll. In this configuration, the conveyance speed of the electrode plate carried out of the first compression roll and the conveyance speed of the electrode plate to be carried into the second compression roll can be set to be the same as or substantially the same as each other. Thus, fluctuations in tension applied to the electrode plate between the two compression rolls can be further suppressed.

Any of the elements of configuration of the compression apparatus A and any of the elements of configuration of the compression apparatus B can be combined as necessary.

As described above, according to the present disclosure, fluctuations in tension applied to the electrode plate between the two compression rolls can be stably suppressed by either or both the rotational speed control using the first threshold value as a trigger condition and the rotational speed control based on the conveyance speed(s) of the electrode plate.

Hereinafter, an example of the compression apparatus according to the present disclosure will be described in detail with reference to the drawings. The above-described elements of configuration can be applied to the elements of configuration of the exemplary compression apparatus described below. The elements of configuration of the exemplary compression apparatus described below can be altered based on the above description. Further, the matters described below may be applied to the above-described embodiments. Of the elements of configuration of the exemplary compression apparatus described below, an element of configuration that is not essential to the compression apparatus according to the present disclosure may be omitted. It should be noted that the drawings indicated below are schematic and do not accurately reflect the shape or number of actual members.

### <<First Embodiment>>

The following describes a first embodiment of the present disclosure. A compression apparatus 10 of the present embodiment is an apparatus for compressing an electrode plate 100 (hereinafter, simply referred to as electrode plate 100) for battery (e.g., a lithium-ion secondary battery) use while conveying it in a predetermined direction. Although not illustrated, the electrode plate 100 includes a coated portion, which is a part of a surface of a substrate (current collector) where an active material layer is formed, and a foil exposed portion (uncoated portion), which is another part of the surface of the substrate where the active material layer is not formed.

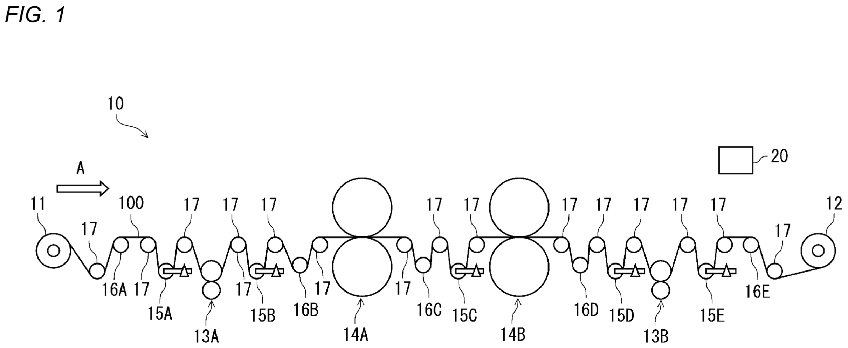

As illustrated in FIG. 1, the compression apparatus 10 includes an unwinder 11, a winder 12, first and second nip rolls 13A and 13B, first and second compression rolls 14A and 14B, first to fifth dancer rolls 15A to 15E, first to fifth tensiometer rolls 16A to 16E, a plurality of guide rolls 17, and a control unit 20.

The unwinder 11 is placed furthest upstream in the compression apparatus 10. The unwinder 11 holds the electrode plate 100 in a wound state before compression by the compression apparatus 10, and feeds it downstream (rightward in FIG. 1).

The winder 12 is placed furthest downstream in the compression apparatus 10. The winder 12 accommodates the electrode plate 100 in the wound state after it has been subjected to compression by the compression apparatus 10.

The first nip roll 13A is placed downstream of the unwinder 11. The first nip roll 13A grips the electrode plate 100 and conveys it in a predetermined conveyance direction (a direction from left to right in FIG. 1, indicated by an arrow A).

The second nip roll 13B is placed downstream of the first nip roll 13A. The second nip roll 13B grips the electrode plate 100 and conveys it in a predetermined conveyance direction.

The first compression roll 14A is placed downstream of the first nip roll 13A and upstream of the second nip roll 13B. The first compression roll 14A includes a pair of rolls placed with a predetermined interval left therebetween. The pair of rolls compresses the electrode plate 100 (specifically, the coated portion of the electrode plate 100). The first compression roll 14A also has a function of conveying the electrode plate 100.

The second compression roll 14B is placed downstream of the first compression roll 14A and upstream of the second nip roll 13B. The second compression roll 14B includes a pair of rolls placed at a predetermined interval left therebetween. The pair of rolls compresses the electrode plate 100 (specifically, the coated portion of the electrode plate 100). The outer diameter of the paired rolls of the second compression roll 14B is equal to the outer diameter of the paired rolls of the first compression roll 14A. The second compression roll 14B also has a function of conveying the electrode plate 100.

The first dancer roll 15A is placed downstream of the unwinder 11 and upstream of the first nip roll 13A. The first dancer roll 15A moves vertically to adjust tension applied to the electrode plate 100 between the unwinder 11 and the first nip roll 13A. In the illustrated example, the tension is reduced as the first dancer roll 15A moves upward, and the tension is increased as the first dancer roll 15A moves downward.

The second dancer roll 15B is placed downstream of the first nip roll 13A and upstream of the first compression roll 14A. The second dancer roll 15B moves vertically to adjust tension applied to the electrode plate 100 between the first nip roll 13A and the first compression roll 14A. In the illustrated example, the tension is reduced as the second dancer roll 15B moves upward, and the tension is increased as the second dancer roll 15B moves downward.

The third dancer roll 15C is placed downstream of the first compression roll 14A and upstream of the second compression roll 14B. The third dancer roll 15C moves between a first end point (in this example, an upper end point) and a second end point (in this example, a lower end point) to adjust tension applied to the electrode plate 100 between the first compression roll 14A and the second compression roll 14B. In the illustrated example, the tension is reduced as the third dancer roll 15C moves upward (toward the first end point), and the tension is increased as the third dancer roll 15C moves downward (toward the second end point). The third dancer roll 15C is an example of a dancer roll.

The fourth dancer roll 15D is placed downstream of the second compression roll 14B and upstream of the second nip roll 13B. The fourth dancer roll 15D moves vertically to adjust tension applied to the electrode plate 100 between the second compression roll 14B and the second nip roll 13B. In the illustrated example, the tension is reduced as the fourth dancer roll 15D moves upward, and the tension is increased as the fourth dancer roll 15D moves downward.

The fifth dancer roll 15E is placed downstream of the second nip roll 13B and upstream of the winder 12. The fifth dancer roll 15E moves vertically to adjust tension applied to the electrode plate 100 between the second nip roll 13B and the winder 12. In the illustrated example, the tension is reduced as the fifth dancer roll 15E moves upward, and the tension is increased as the fifth dancer roll 15E moves downward.

The first tensiometer roll 16A is placed downstream of the unwinder 11 and upstream of the first dancer roll 15A. The first tensiometer roll 16A measures the tension applied to the electrode plate 100 between the unwinder 11 and the first dancer roll 15A (more broadly, between the unwinder 11 and the first nip roll 13A). Data relating to the measured tension is sent to the control unit 20.

The second tensiometer roll 16B is placed downstream of the second dancer roll 15B and upstream of the first compression roll 14A. The second tensiometer roll 16B measures the tension applied to the electrode plate 100 between the second dancer roll 15B and the first compression roll 14A (more broadly, between the first nip roll 13A and the first compression roll 14A). Data relating to the measured tension is sent to the control unit 20.

The third tensiometer roll 16C is placed downstream of the first compression roll 14A and upstream of the third dancer roll 15C. The third tensiometer roll 16C measures the tension applied to the electrode plate 100 between the first compression roll 14A and the third dancer roll 15C (more broadly, between the first compression roll 14A and the second compression roll 14B). Data relating to the measured tension is sent to the control unit 20.

The fourth tensiometer roll 16D is placed downstream of the second compression roll 14B and upstream of the fourth dancer roll 15D. The fourth tensiometer roll 16D measures the tension applied to the electrode plate 100 between the second compression roll 14B and the fourth dancer roll 15D (more broadly, between the second compression roll 14B and the second nip roll 13B). Data relating to the measured tension is sent to the control unit 20.

The fifth tensiometer roll 16E is placed downstream of the fifth dancer roll 15E and upstream of the winder 12. The fifth tensiometer roll 16E measures the tension applied to the electrode plate 100 between the fifth dancer roll 15E and the winder 12 (more broadly, between the second nip roll 13B and the winder 12). Data relating to the measured tension is sent to the control unit 20.

The plurality of (15 in this example) guide rolls 17 are arranged in the conveying path of the electrode plate 100 in the compression apparatus 10, and guide the electrode plate 100. Each guide roll 17 is placed between the components described above (see FIG. 1), but detailed description of the arrangement will be omitted.

The control unit 20 controls the operations of the first and second nip rolls 13A and 13B, the first and second compression rolls 14A and 14B, and the first to fifth dancer rolls 15A to 15E. Control on the first to fifth dancer roll 15A to 15E may be performed based on the measurement data from the first to fifth tensiometer rolls 16A to 16E. The control unit 20 includes an arithmetic device and a storage device that stores therein a program executable by the arithmetic device.

The control unit 20 is configured to adjust, when the third dancer roll 15C has moved beyond a first threshold value Th1 from the middle point between the first end point and the second end point, the rotational speeds of either or both the first compression roll 14A and the second compression roll 14B so as to dampen movement of the third dancer roll 15C away from the middle point. In the present embodiment, the distance between the middle point and the first end point (the distance in the vertical direction) is equal to the distance between the middle point and the second end point (the distance in the vertical direction). The first threshold value Th1 is set to a predetermined value that is 20% or more and 40% or less of the distance between the middle point and each end point. During the time when the amount of movement of the third dancer roll 15C from the middle point does not exceed the first threshold value Th1 in the steady state by contrast, the control unit is configured not to change the rotational speeds of the first compression roll 14A and the second compression roll 14B.

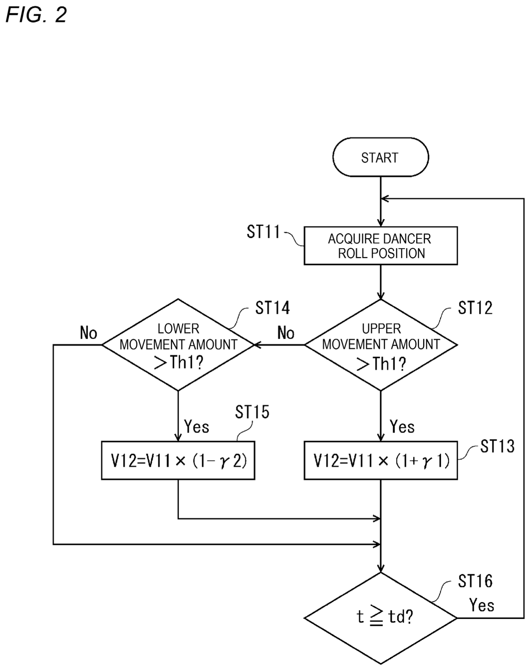

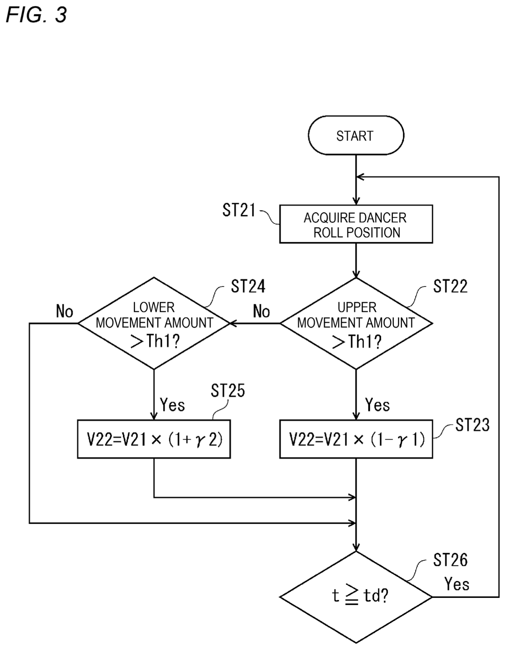

Referring now to FIGS. 2 and 3, a control flow (FIG. 2) for adjusting the rotational speed of the first compression roll 14A and a control flow (FIG. 3) for adjusting the rotational speed of the second compression roll 14B will be specifically described.

As depicted in FIG. 2, under the rotational speed control on the first compression roll 14A, the control unit 20 first acquires position information of the third dancer roll 15C (ST11).

Next, the control unit 20 determines whether or not the third dancer roll 15C has moved beyond the first threshold value Th1 from the middle point toward the first end point (upward) (ST12). If the determination result is "Yes", the setting value of the rotational speed of the first compression roll 14A is updated to V12, obtained by V12 = V11 × (1 + γ1) (where γ1 is a positive value less than 1) using the current rotational speed of the first compression roll 14A as V11 (ST13).

If the determination result at Step ST12 is "No", the control unit 20 determines whether or not the third dancer roll 15C has moved beyond the first threshold value Th1 from the middle point toward the second end point (downward) (ST14). If the determination result is "Yes", the setting value of the rotational speed of the first compression roll 14A is updated to V13, obtained by V13 = V11 × (1 - γ2) (where γ2 is a positive value less than 1) (ST15).

After completion of Step ST13 or Step ST15, or if the determination result at Step ST14 is "No", the control unit 20 waits until the next position information of the third dancer roll 15C is acquired (ST16). Specifically, when a time t elapsed since the acquisition of the position information of the third dancer roll 15C exceeds or reaches a predetermined time threshold td, the control unit 20 executes Step ST11 and the steps thereafter again.

As depicted in FIG. 3, under the rotational speed control on the second compression roll 14B, the control unit 20 first acquires position information of the third dancer roll 15C (ST21).

Next, the control unit 20 determines whether or not the third dancer roll 15C has moved beyond the first threshold value Th1 from the middle point toward the first end (upward) (ST22). If the determination result is "Yes", the setting value of the rotational speed of the second compression roll 14B is updated to V22, obtained by V22 = V21 × (1 - γ1) (where γ1 is a positive value less than 1) using the current rotational speed of the second compression roll 14B as V21 (ST23).

If the determination result at Step ST22 is "No", the control unit 20 determines whether or not the third dancer roll 15C has moved beyond the first threshold value Th1 from the middle point toward the second end point (downward) (ST24). If the determination result is "Yes", the setting value of the rotational speed of the second compression roll 14B is updated to V23, obtained by V23 = V21 × (1 + γ2) (where γ2 is a positive value less than 1) (ST25).

After completion of Step ST23 or Step ST25, or if the determination result at Step ST24 is "No", the control unit 20 waits until the next position information of the third dancer roll 15C is acquired (ST26). Specifically, when the time t elapsed since acquisition of the position information of the third dancer roll 15C exceeds or reaches the predetermined time threshold td, the control unit 20 executes Step ST21 and the steps thereafter again.

### <<Second Embodiment>>

A second embodiment of the present disclosure will be described. A compression apparatus 10 of the present embodiment differs from that of the first embodiment in that stretching rolls 18 are provided upstream of the first compression roll 14A. Hereinafter, differences from the first embodiment will be mainly described.

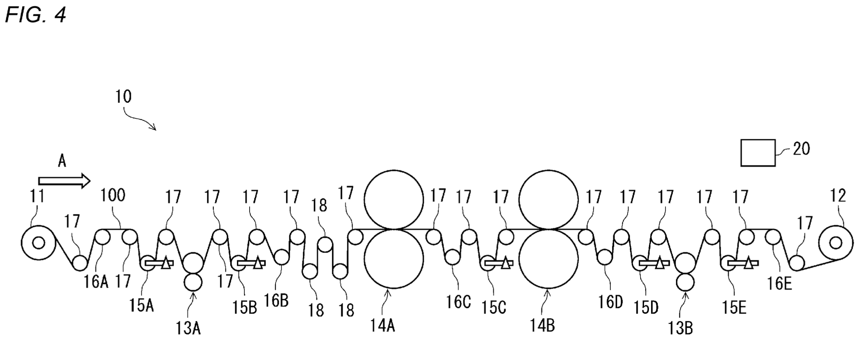

As illustrated in FIG. 4, the compression apparatus 10 of the present embodiment includes a plurality of (in this example, three) stretching rolls 18 placed downstream of the second tensiometer roll 16B and upstream of the first compression roll 14A. Each stretching roll 18 stretches the exposed foil portion of the electrode plate 100. The number of the stretching rolls 18 may be one, or may be any number of two or more.

The control unit 20 is configured to adjust, when the third dancer roll 15C has moved beyond the first threshold value Th1 from the middle point, the rotational speed of the second compression roll 14B so as to dampen movement of the third dancer roll 15C away from the middle point. The aspect of this speed control is similar to that described above with reference to FIG. 3.

### <<Third Embodirnent>>

A third embodiment of the present disclosure will be described. A compression apparatus 10 of the present embodiment differs from that of the first embodiment in that stretching rolls 18 are provided downstream of the second compression roll 14B. Hereinafter, differences from the first embodiment will be mainly described.

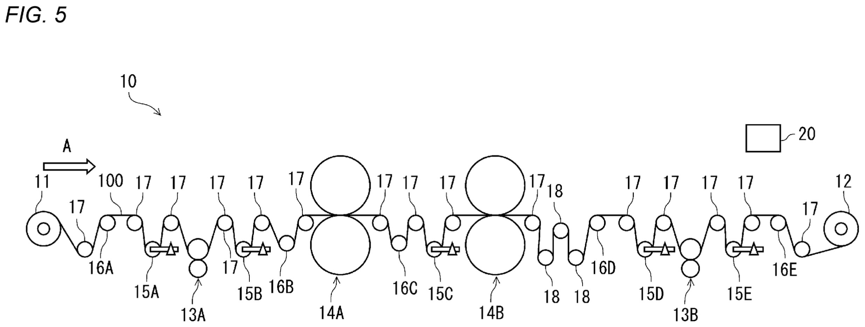

As illustrated in FIG. 5, the compression apparatus 10 of the present embodiment includes a plurality of (in this embodiment, three) stretching rolls placed downstream of the second compression roll 14B and upstream of the fourth tensiometer roll 16D. Each stretching roll 18 stretches the exposed foil portion of the electrode plate 100. The number of the stretching rolls 18 may be one, or may be any number of two or more.

The control unit 20 is configured to adjust, when the third dancer roll 15C has moved beyond the first threshold value Th1 from the middle point, the rotational speed of the first compression roll 14A so as to dampen movement of the third dancer roll 15C away from the middle point of the third dancer roll 15C. The aspect of this speed control is similar to that described above with reference to FIG. 2.

### <<Fourth Embodiment>>

A fourth embodiment of the present disclosure will be described. A compression apparatus 10 of the present embodiment differs from that of the first embodiment in the aspect of adjustment of the rotational speed of the second compression roll 14B. Hereinafter, differences from the first embodiment will be mainly described.

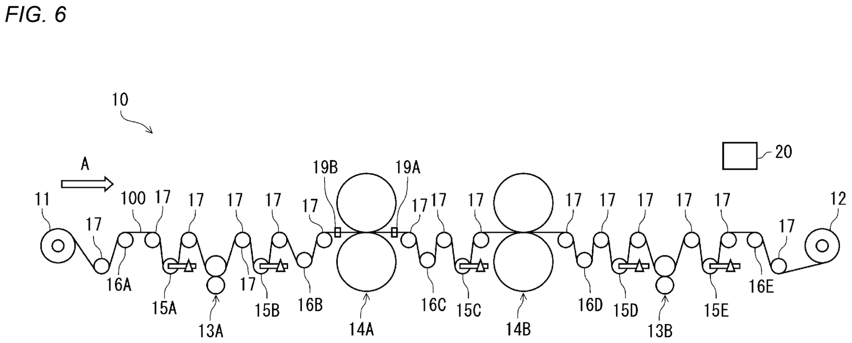

As illustrated in FIG. 6, the compression apparatus 10 of the present embodiment includes a first speed sensor 19A and a second speed sensor 19B.

The first speed sensor 19A is provided between the first compression roll 14A and a subsequent guide roll 17, and detects a conveyance speed V1 of the electrode plate 100 carried out of the first compression roll 14A. Data relating to the detected conveyance speed is sent to the control unit 20.

The second speed sensor 19B is provided between the first compression roll 14A and a preceding guide roll 17, and detects a conveyance speed V2 of the electrode plate 100 to be carried into the first compression roll 14A. Data relating to the detected conveyance speed is sent to the control unit 20.

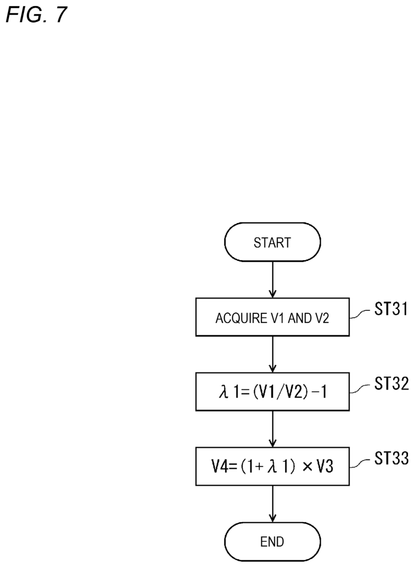

The control unit 20 is configured to adjust the rotational speed of the second compression roll 14B based on the conveyance speed V1 detected by the first speed sensor 19A and the conveyance speed V2 detected by the second speed sensor 19B. More specifically, as illustrated in FIG. 7, the control unit 20 is configured to acquire the conveyance speed V1 and the conveyance speed V2 (ST31), obtain an elongation rate λ1 of the electrode plate 100 using an equation λ1 = (V1/V2) - 1 (ST32), and rotate the second compression roll 14B at a rotational speed V4 determined as V4 = (1 + λ1) × V3, where V3 represents the rotational speed of the first compression roll 14A (ST33).

### <Supplemental Remarks>

According to the above description of the embodiments, the following techniques are disclosed.

### (Technique 1)

A compression apparatus including:
a first compression roll that compresses an electrode plate for battery use;
a second compression roll that is provided downstream of the first compression roll and that compresses the electrode plate;
a dancer roll that is provided between the first compression roll and the second compression roll and that adjusts tension applied to the electrode plate by moving between a first end point and a second end point; and
a control unit that controls the first compression roll, the second compression roll, and the dancer roll, wherein
the control unit is configured to adjust, when the dancer roll has moved beyond a first threshold value from a middle point between the first end point and the second end point, rotational speeds of either or both the first compression roll and the second compression roll so as to dampen movement of the dancer roll away from the middle point.

### (Technique 2)

The compression apparatus according to Technique 1, wherein the control unit is configured so as not to change the rotational speeds during time when an amount of movement of the dancer roll from the middle point does not exceed the first threshold value in a steady state

### (Technique 3)

The compression apparatus according to Technique 1 or 2, further including a stretching roll that is provided upstream of the first compression roll and that stretches a foil exposed portion of the electrode plate, wherein
the control unit is configured to adjust, when the dancer roll has moved beyond the first threshold value from the middle point, the rotational speed of the second compression roll so as to dampen movement of the dancer roll away from the middle point.

### (Technique 4)

The compression apparatus according to Technique 1 or 2, further including a stretching roll that is provided downstream of the second compression roll and that stretches a foil exposed portion of the electrode plate, wherein
the control unit is configured to adjust, when the dancer roll has moved beyond the first threshold value from the middle point, the rotational speed of the first compression roll so as to dampen movement of the dancer roll away from the middle point.

### (Technique 5)

A compression apparatus including:
a first compression roll that compresses an electrode plate for battery use;
a second compression roll that is provided downstream of the first compression roll and that compresses the electrode plate;
a first speed sensor that detects a conveyance speed of the electrode plate carried out of the first compression roll; and
a control unit that controls the first compression roll and the second compression roll, wherein
the control unit is configured to adjust a rotational speed of the second compression roll based on at least the conveyance speed detected by the first speed sensor.

### (Technique 6)

The compression apparatus according to Technique 5, further comprising a second speed sensor that detects a conveyance speed of the electrode plate to be carried into the first compression roll, wherein
the control unit is configured to adjust the rotational speed of the second compression roll based on the conveyance speed detected by the first speed sensor and the conveyance speed detected by the second speed sensor.

### (Technique 7)

The compression apparatus according to Technique 6, wherein the control unit is configured to adjust the rotational speed of the second compression roller based on an elongation rate λ1 of the electrode plate determined as λ1 = (V1/V2) - 1, where V1 represents the conveyance speed detected by the first speed sensor and V2 represents the conveyance speed detected by the second speed sensor.

### (Technique 8)

The compression apparatus according to Technique 7, wherein the control unit is configured to rotate the second compression roll at a rotational speed V4 determined as V4 = (1 + λ1)×V3, where V3 represents the rotational speed of the first compression roll.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used for compression apparatus.

### [Reference Signs List]

10: Compression apparatus
   11: Unwinder
   12: Winder
   13A: First nip roll
   13B: Second nip roll
   14A: First compression roll
   14B: Second compaction roll
   15A: First dancer roll
   15B: Second dancer roll
   15C: Third dancer roll
   15D: Fourth dancer roll
   15E: Fifth dancer roll
   16A: First tensiometer roll
   16B: Second tensiometer roll
   16C: Third tensiometer roll
   16D: Fourth tensiometer roll
   16E: Fifth tensiometer roll
   17: Guide roll
   18: Stretching roll
   19A: First speed sensor
   19B: Second speed sensor
   20: Control unit
100: Electrode plate
Th1: First threshold value

## Claims

1. A compression apparatus comprising:
a first compression roll that compresses an electrode plate for battery use;
a second compression roll that is provided downstream of the first compression roll and that compresses the electrode plate;
a first speed sensor that detects a conveyance speed of the electrode plate carried out of the first compression roll; and
a control unit that controls the first compression roll and the second compression roll, wherein
the control unit is configured to adjust a rotational speed of the second compression roll based on at least the conveyance speed detected by the first speed sensor.

2. The compression apparatus according to claim 1, further comprising
a second speed sensor that detects a conveyance speed of the electrode plate to be carried into the first compression roll, wherein
the control unit is configured to adjust the rotational speed of the second compression roll based on the conveyance speed detected by the first speed sensor and the conveyance speed detected by the second speed sensor.

3. The compression apparatus according to claim 2, wherein
the control unit is configured to adjust the rotational speed of the second compression roller based on an elongation rate λ1 of the electrode plate determined as λ1 = (V1/V2) - 1, where V1 represents the conveyance speed detected by the first speed sensor and V2 represents the conveyance speed detected by the second speed sensor.

4. The compression apparatus according to claim 3, wherein
the control unit is configured to rotate the second compression roll at a rotational speed V4 determined as V4 = (1 + λ1) ×V3, where V3 represents the rotational speed of the first compression roll.
